# EUROPEAN PATENT SPECIFICATION

(11) **EP 4 052 838 B1**
(45) Date of publication and mention of the grant of the patent: **29.11.2023**
(21) Application number: 20881812.0
(22) Date of filing: 14.10.2020
(51) Int. Cl.: B23K 37/04, B23K 26/08, B23K 26/10, B23Q 3/02

(54) **WORKPIECE SUPPORT MEMBER FOR USE WITH WORKPIECE SUPPORT TABLE, AND THERMAL PROCESSING MACHINE**
WERKSTÜCKTRÄGER ZUR VERWENDUNG MIT WERKSTÜCKTRÄGERTISCH UND THERMISCHE BEARBEITUNGSMASCHINE
ÉLÉMENT DE SUPPORT DE PIÈCE À TRAVAILLER DESTINÉ À ÊTRE UTILISÉ AVEC UNE TABLE DE SUPPORT DE PIÈCE À TRAVAILLER, ET MACHINE DE TRAITEMENT THERMIQUE

(30) Priority: 31.10.2019 JP 2019198677; 22.04.2020 JP 2020076035
(43) Date of publication of application: 07.09.2022
(73) Proprietor: Amada Co., Ltd., Isehara-shi, Kanagawa 259-1196 (JP)
(72) Inventor: TAKATSU, Masato, Isehara-shi, Kanagawa 259-1196 (JP); SETOGUCHI, Jun, Isehara-shi, Kanagawa 259-1196 (JP); WAKE, Koichi, Isehara-shi, Kanagawa 259-1196 (JP)
(74) Representative: Grünecker Patent- und Rechtsanwälte PartG mbB
(86) International application number: PCT/JP2020/038771
(87) International publication number: WO 2021/085137

(56) References cited:
- JP-A- H 048 440
- JP-A- H 048 440
- JP-A- 2001 030 093
- JP-A- 2001 314 998
- JP-U- H0 737 479
- JP-U- H0 737 479
- US-A1- 2008 029 489

## Description

### Technical Field

The present disclosure relates to a workpiece support member for use with a workpiece support table, and a thermal processing machine.

### Background Art

Conventionally, a plurality of plate-shaped workpiece support members are provided as support members each supporting, from a bottom surface, a sheet metal (workpiece) to be processed, in a workpiece support table of a thermal processing machine such as a laser processing machine or a plasma processing machine. The plurality of workpiece support members are arranged at predetermined intervals in the workpiece support table with each plate surface thereof being perpendicular to a floor surface.

As one form of the above-described workpiece support member, there is a workpiece support member having an upper end part continuously formed with a triangular protrusion. When the workpiece to be processed is mounted on the workpiece support table in which the plurality of workpiece support members are arranged, the protrusion of the upper end part of each workpiece support member abuts on the bottom surface of the workpiece, and the workpiece is point-supported at a plurality of points. The workpiece is point-supported, and an abutment area between the workpiece and the workpiece support member is minimized, so that welding between the workpiece and the workpiece support member by thermal processing, deposition of spatter onto the workpiece support member and occurrence of damages on the workpiece support member can be inhibited. In the workpiece support member, as a material that does not burn with a laser beam and that is replaceable at low cost, a material made of a metal is often used.

Further related background art is disclosed in Patent Literature 2, forming the basis for the preamble of claim 1

### Citation List

### Patent Literature

Patent Literature 1: Japanese Patent Application Laid-Open Publication No. 2001-314998
Patent Literature 2: JP 2001 030093 A

### Summary

In a configuration where a workpiece is point-supported as described above, however, wear or damage on a protrusion of a workpiece support member when thermally processed cannot be completely avoided. The metallic workpiece support member and the workpiece are both made of a metal, and hence metallic bonding between a melted metal of the workpiece being processed and the workpiece support member and melting of the workpiece support member itself with a laser beam cannot be prevented. Therefore, every time the workpiece support member is used for a predetermined period of time (e.g., about one month), the workpiece support member is required to be replaced with a new one, and this replacing work requires a lot of cost, labor and time.

An object of one or more embodiments is to provide a workpiece support member for use with a workpiece support table, and a thermal processing machine, both of which have excellent durability.

A first aspect of the one or more embodiments provides a workpiece support member for use with a workpiece support table, the workpiece support member being formed of carbon fibers in a plurality of different directions and having a long plate shape.

A second aspect of the one or more embodiments provides a thermal processing machine in which a workpiece support member formed of carbon fibers in a plurality of different directions and having a long plate shape is installed in a workpiece support table to be perpendicular to a floor surface in a curved manner in a long side direction of the workpiece support member.

A third aspect of the one or more embodiments provides a thermal processing machine in which a plurality of workpiece support members each including a slit configured to cross and fit another plate-shaped member are combined in a mesh shape and installed in a workpiece support table.

According to the one or more embodiments, durability of each of a workpiece support member for use with a workpiece support table, and a thermal processing machine can be improved.

### Brief Description of Drawings

[Figure 1] Figure 1 is an appearance perspective view showing a thermal processing machine in which workpiece support members of one or more embodiments are used.
[Figure 2] Figure 2 is an appearance perspective view showing a state where workpiece support members of a first embodiment are arranged.
[Figure 3] Figure 3 is a front view showing a workpiece support member 21-1 with a first shape in the first embodiment.
[Figure 4] Figure 4 is a view showing a state where a protrusion is damaged in a case where a weaving direction of the workpiece support member 21-1 with the first shape in the first embodiment matches a vertical direction of the protrusion.
[Figure 5] Figure 5 is a view showing a state where the workpiece support member 21-1 with the first shape in the first embodiment is cut out from a thin plate of plainly woven carbon fibers.
[Figure 6] Figure 6 is a view showing a state where a protrusion is damaged in a case where the weaving direction of the workpiece support member 21-1 with the first shape in the first embodiment is a diagonal direction to the protrusion.
[Figure 7A] Figure 7A is a view showing a case where a protrusion 211 of the workpiece support member 21-1 with the first shape in the first embodiment has an apex angle of 30°.
[Figure 7B] Figure 7B is a view showing a case where the protrusion 211 of the workpiece support member 21-1 with the first shape in the first embodiment has an apex angle of 60°.
[Figure 7C] Figure 7C is a view showing a case where the protrusion 211 of the workpiece support member 21-1 with the first shape in the first embodiment has an apex angle of 90°.
[Figure 8] Figure 8 is a front view showing a workpiece support member 21-2 with a second shape in the first embodiment.
[Figure 9] Figure 9 is a view showing a state where a portion close to a center in a protrusion is damaged in a case where a weaving direction of the workpiece support member 21-2 with the second shape in the first embodiment matches a vertical direction of the protrusion.
[Figure 10] Figure 10 is a view showing a state where a portion close to an end portion of a protrusion is damaged in the case where the weaving direction of the workpiece support member 21-2 with the second shape in the first embodiment matches the vertical direction of the protrusion.
[Figure 11] Figure 11 is a view showing a state where a portion close to an end portion of a protrusion is damaged in a case where the weaving direction of the workpiece support member 21-2 with the second shape in the first embodiment is a diagonal direction to the protrusion.
[Figure 12] Figure 12 is a view showing a case where a protrusion 212 of the workpiece support member 21-2 with the second shape in the first embodiment has a trapezoidal shape with an angle of opposite ends of an upper base being 135°.
[Figure 13A] Figure 13A is a view showing a case where a weaving direction of a workpiece support member 21-3 with a third shape in the first embodiment matches a vertical direction of a protrusion.
[Figure 13B] Figure 13B is a view showing a state where the protrusion shown in Figure 13A is damaged.
[Figure 14] Figure 14 is a front view showing a shape of each of workpiece support members 21-4a to 21-4d for use in a second embodiment and including slits crossing each other.
[Figure 15] Figure 15 is a top surface view showing a state where the workpiece support members 21-4a to 21-4d are combined in a mesh shape in the second embodiment.
[Figure 16] Figure 16 is a partial front view showing a workpiece support member 210 in a third embodiment.
[Figure 17] Figure 17 is a partially enlarged view of an upper part of the workpiece support member 210 in the third embodiment.
[Figure 18A] Figure 18A is a front view showing a workpiece support member 210a that is a first specific example of the workpiece support member 210 in the third embodiment.
[Figure 18B] Figure 18B is a front view showing a workpiece support member 210b that is a second specific example of the workpiece support member 210 in the third embodiment.
[Figure 18C] Figure 18C is a front view showing a workpiece support member 210c that is a third specific example of the workpiece support member 210 in the third embodiment.
[Figure 18D] Figure 18D is a front view showing a workpiece support member 210d that is a fourth specific example of the workpiece support member 210 in the third embodiment.
[Figure 18E] Figure 18E is a front view showing a workpiece support member 210e that is a fifth specific example of the workpiece support member 210 in the third embodiment.

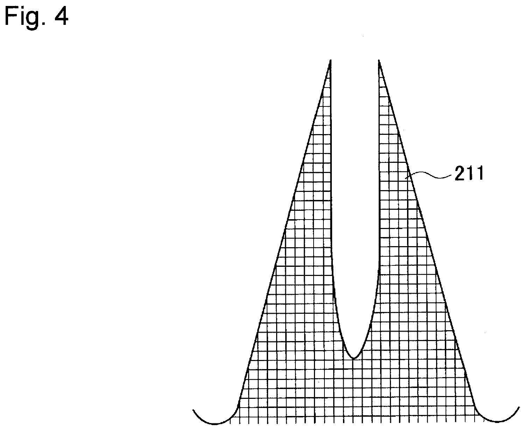

The embodiments according to Figures 4, 9, 10, 13A and 13B do not show weaving directions of the carbon fibres according to the claimed invention.

### Description of Embodiment

Hereinafter, description will be made as to a workpiece support member for use with a workpiece support table, and a thermal processing machine in one or more embodiments with reference to the accompanying drawings.

### <First Embodiment>

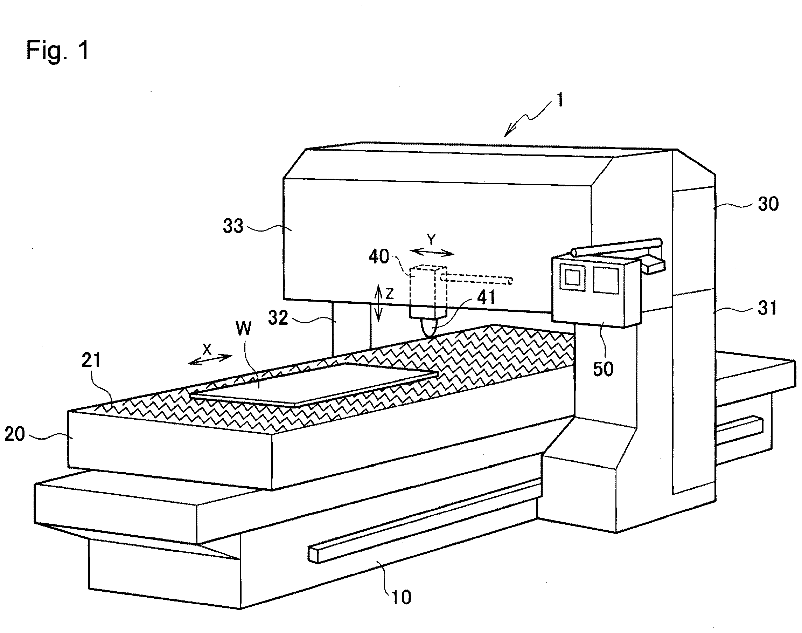

A laser processing machine 1 according to one or more embodiments shown in Figure 1 is a thermal processing machine configured to perform a cutting process. As shown in Figure 1, on a base 10, a workpiece support table 20 is provided on which a workpiece W to be processed is mounted. In the workpiece support table 20, a plurality of workpiece support members 21 are arranged in an X-direction. Description will be made later as to a material and shape of each workpiece support member 21.

The laser processing machine 1 includes a gate-type frame 30 disposed across the workpiece support table 20. The frame 30 includes side frames 31 and 32 and an upper frame 33.

In the upper frame 33, a carriage 40 movable in a Y-direction is provided. In the carriage 40, a laser head 41 configured to emit a laser beam is attached. The frame 30 moves in the X-direction and the carriage 40 moves in the Y-direction, so that the laser head 41 is configured to arbitrarily move above the workpiece W in the X and Y-directions.

An NC device 50 to control the laser processing machine 1 is attached to the frame 30. The NC device 50 controls the laser processing machine 1 in accordance with processing data (NC data) for processing the workpiece W. The NC device 50 is a control device configured to control the laser processing machine 1.

The NC device 50 controls the machine to irradiate the workpiece W with the laser beam while moving the laser head 41 in the X-direction or the Y-direction, so that the workpiece W is cut and processed.

Description will be made as to the workpiece support member 21 installed in the workpiece support table 20. Each workpiece support member 21 is cut in a long shape from a thin plate formed by plainly weaving string-shaped carbon fibers, such as a carbon fiber reinforced carbon composite material (C/C composite material). The plain weaving is weaving of fibers by alternately crossing warp and weft threads.

The carbon fibers have a melting point of 3550°C, and this temperature is much higher than a melting point of 1580°C of a common metal workpiece W. Therefore, use of the carbon fibers as the material of the workpiece support member 21 can prevent welding between the workpiece W irradiated with the laser beam and the workpiece support member 21 during the cutting process of the workpiece W. Also, spatter scattered in the cutting process is hardly welded to the workpiece support member 21 and hence the spatter is hardly deposited. Even if the spatter is deposited, the spatter is easy to peel off, and a removing operation is facilitated.

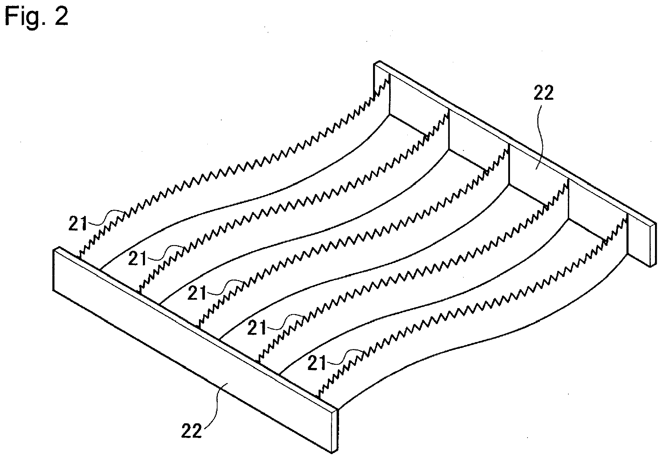

Also, the carbon fibers woven in the C/C composite material are impregnated with various substances to reinforce the fibers, and hence the material formed in a thin plate shape generates elasticity. By use of this property, as shown in Figure 2, each workpiece support member 21 having a plate surface perpendicular to a floor surface and being curved in an S-shape in a long side direction is attached to table frames 22 at opposite ends of a long side of the workpiece support table 20.

The curved workpiece support member 21 is attached to the table frames 22, so that when linearly cutting the workpiece W, continuous irradiation of the upper part of the workpiece support member 21 with the laser beam can be avoided, and deposition of spatter and damage on the workpiece support member 21 can be inhibited.

Description will be made as to a first shape of a workpiece support member 21-1, a second shape of a workpiece support member 21-2, and a third shape of a workpiece support member 21-3, as specific examples of a shape of the workpiece support member 21, with reference to the drawings.

### [Workpiece Support Member 21-1 with First Shape]

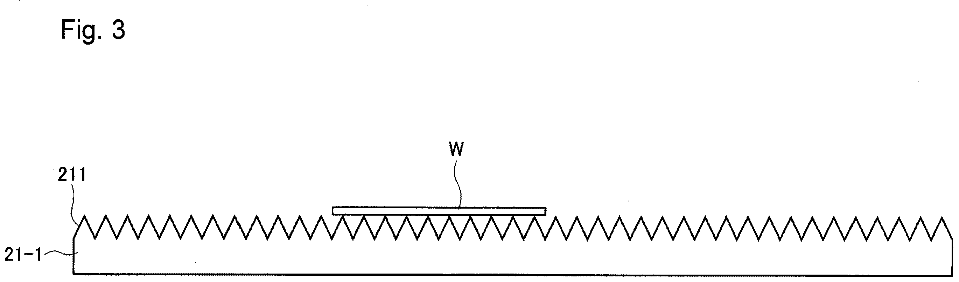

As shown in Figure 3, the workpiece support member 21-1 with the first shape has an upper end part continuously provided with triangular protrusions 211. When a plurality of workpiece support members 21-1 are arranged in the workpiece support table 20 and the workpiece W is mounted on the members, the triangular protrusions 211 of the upper end part of each workpiece support member 21-1 then abut on a bottom surface of the workpiece W, and the workpiece W is point-supported at a plurality of points. Thus, the workpiece W is point-supported, so that when cutting the workpiece W, a probability of the laser beam hitting an upper part of the workpiece support member 21-1 can be decreased, and the workpiece support member 21-1 can be inhibited from being damaged.

Conventionally, workpiece support members each made of a metal plate having an upper end part continuously provided with a triangular protrusion are used, each workpiece support member of the metal plate has a melting point equal to that of the workpiece W, and hence spatter generated in a cutting process is welded and deposited. Therefore, a groove between adjacent protrusions requires to deepen so that a shape of the protrusion of an upper part of the workpiece support member is maintained even if the spatter is deposited to a certain degree.

However, the workpiece support member 21-1 with the first shape is made of carbon fibers having a high melting point as described above, and hence even spatter generated is not welded to and easily peels off the workpiece support member 21-1. Therefore, a groove between adjacent protrusions 211 can be shallow. Since the groove between the protrusions 211 is shallow, a workpiece W of a small object can be prevented from falling into the groove.

Also, when a weaving direction of the above-described plain weaving of the workpiece support member 21-1 is a 0°-90° direction to a long side-short side direction of the workpiece support member 21-1, and in a case where the laser beam with high energy for pierced hole processing or the like hits the protrusion 211 to damage the protrusion 211, as shown in Figure 4, there is a high possibility that a sharp shape, such as a needle shape, is formed in a tip end of the protrusion 211. When such a sharp shape is formed, a worker needs to pay attention not to touch this tip end during a replacement work of the workpiece support member 21-1.

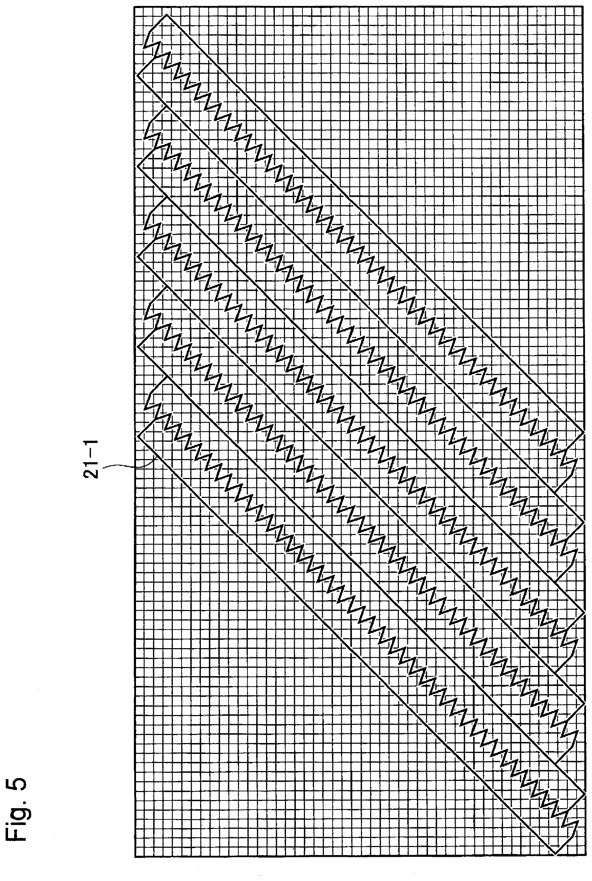

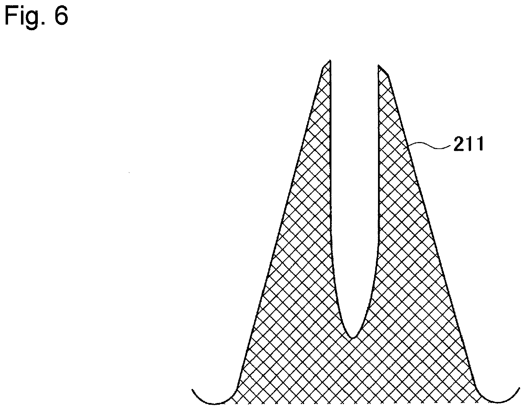

To solve the problem, when cutting out the workpiece support member 21-1 with the first shape from the thin plate of the plainly woven carbon fibers, as shown in Figure 5, the member is cut out in such a way that the long side-short side direction of the workpiece support member 21-1 is a diagonal direction that does not match the 0°-90° direction to the weaving direction, for example, a 45°-45° direction. Consequently, the weaving direction is also diagonal to a triangular shape of the protrusion 211. When the workpiece support member 21-1 is formed in this way and in a case where the laser beam hits the protrusion 211 to damage the protrusion 211, the tip end of the protrusion 211 breaks diagonally in a fiber direction as shown in Figure 6, and the formation of the sharp shape can be avoided.

Also, when the weaving direction of the plain weaving of the workpiece support member 21-1 is the 0°-90° direction to the long side-short side direction of the workpiece support member 21-1, fibers in one of a vertical direction and a lateral direction cannot resist load from an upward direction and moment from the lateral direction to the protrusion 211 at all. Therefore, strength of the workpiece support member 21-1 lowers, to make the member easy to be damaged.

To solve the problem, as described above, the weaving direction of the plain weaving of the workpiece support member 21-1 is the diagonal direction that does not match the 0°-90° direction, for example, the 45°-45° direction, to the long side-short side direction of the workpiece support member 21-1, so that the fibers in the vertical direction and lateral direction of the protrusion 211 can resist the load from both the upward and lateral directions. Consequently, the strength of the workpiece support member 21-1 increases.

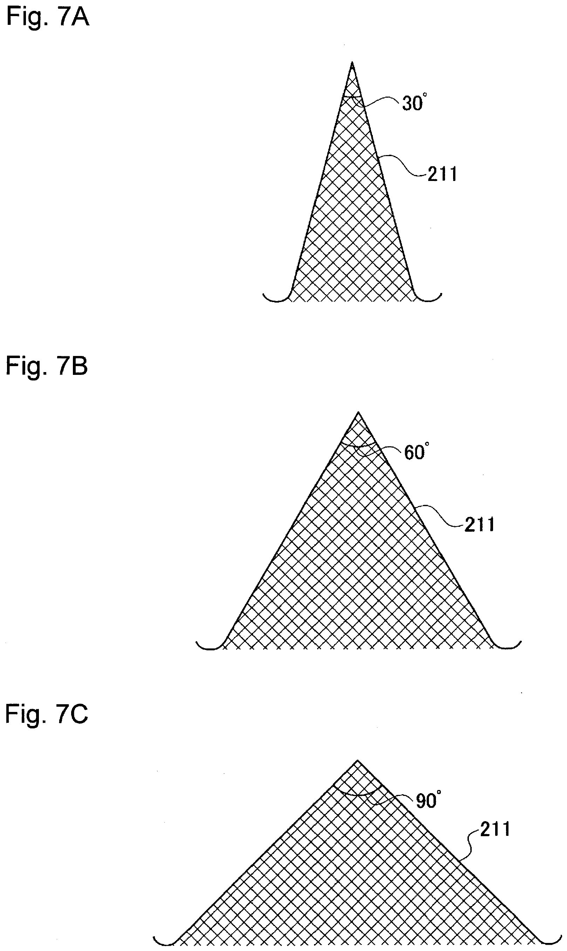

Furthermore, when an oblique side of a triangle of the protrusion 211 of the workpiece support member 21-1 is parallel to the weaving direction of the plain weaving, a force for the fibers to resist the load from the upward direction and the moment from the lateral direction to the protrusion 211 is maximized. Therefore, a shape with an angle of an apex of the protrusion 211 being close to 90° as shown in Figure 7C is more preferable than a shape with the angle being, for example, about 30° as shown in Figure 7A or about 60° as shown in Figure 7B.

### [Workpiece Support Member 21-2 with Second Shape]

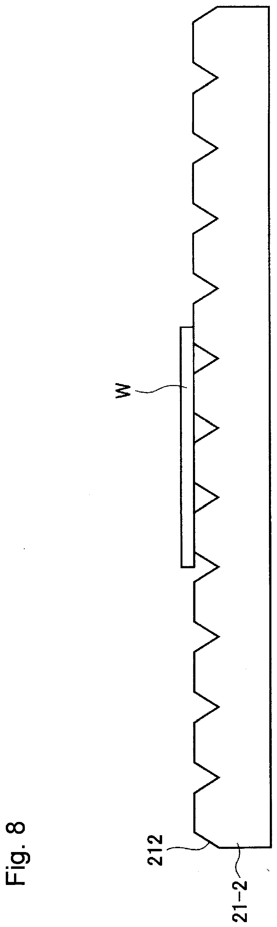

As shown in Figure 8, the workpiece support member 21-2 with the second shape has an upper end part continuously provided with trapezoidal protrusions 212. When a plurality of workpiece support members 21-2 are arranged in the workpiece support table 20 and a workpiece W is mounted on the members, each of respective top surfaces of the trapezoidal protrusions 212 of an upper part of each workpiece support member 21-2 then abuts on a bottom surface of the workpiece W, and the workpiece W is supported. In a case where the workpiece support member 21-2 with the second shape is used, an abutting area on the workpiece W is larger than that in a case where the workpiece support member 21-1 with the first shape is used, and the workpiece W is stably supported.

When the upper end part of the workpiece support member 21 is made linear without providing any protrusions, the workpiece W is further stably supported, but in this shape, a release space for assist gas generated when performing processing is unfavorably limited. Therefore, by providing the trapezoidal protrusions 212, the release space for the assist gas can be secured, while stably supporting the workpiece W.

Considering that the top surface of each of the trapezoidal protrusions 212 might be damaged by irradiation with a laser beam, the top surface is formed with a secured certain size, so that occurrence of a damaged portion cannot interfere with support of the workpiece W. Even when the top surface of each protrusion 212 is made wide to some extent, the damaged portion might occur due to the laser beam hitting the top surface of the protrusion 212, but in this case, the damaged portion provides the release space for the assist gas.

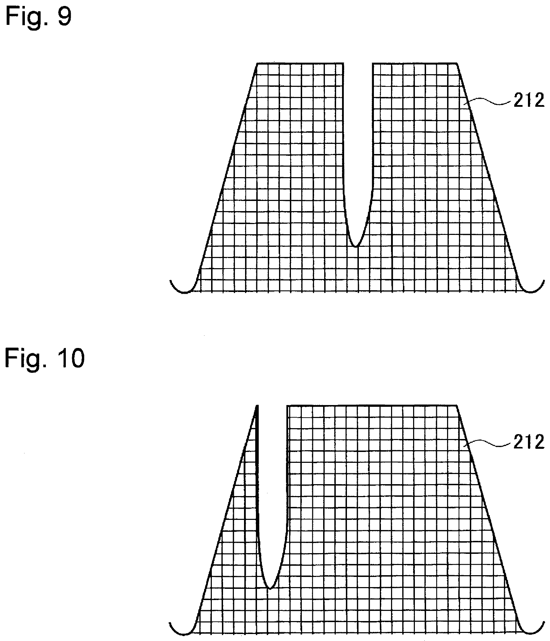

Also, each protrusion 212 of the upper end part is formed in a trapezoidal shape, and hence formation of a sharp shape can be avoided, in a case where a portion of the protrusion 212 close to a center of the protrusion is damaged by the laser beam hitting the portion as shown in Figure 9, even in a configuration where a weaving direction of the workpiece support member 21-2 is a 0°-90° direction to a long side-short side direction of the workpiece support member 21-2.

However, even when the protrusion 212 of the upper end part is made trapezoidal, a sharp shape might be formed on an end portion side as shown in Figure 10, in a case where a portion of the protrusion 212 close to an end portion of the protrusion is damaged by the laser beam hitting the portion, in the configuration where the weaving direction of the workpiece support member 21-2 is the 0°-90° direction to the long side-short side direction of the workpiece support member 21-2.

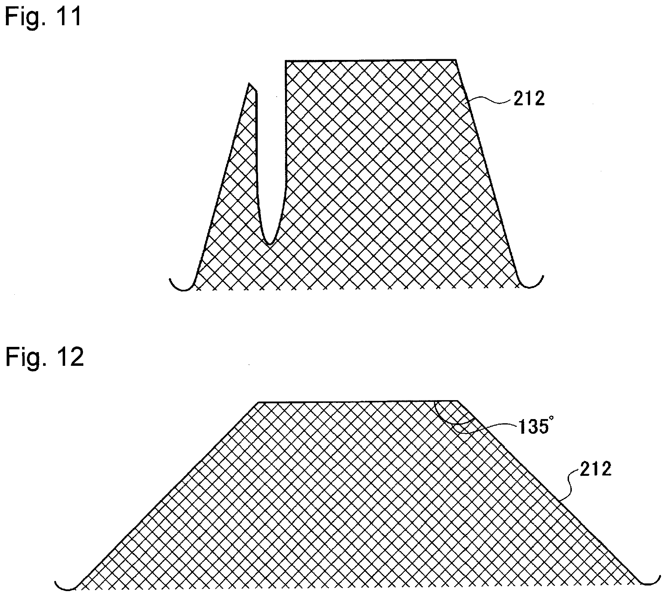

To cope with this problem, the workpiece support member 21-2 with the second shape may be cut out in such a way that the long side-short side direction of the workpiece support member 21-2 is diagonal, for example, the 45°-45° direction to the weaving direction, in the same manner as in the above-described workpiece support member 21-1 with the first shape. Consequently, in a case where the weaving direction is also diagonal to the protrusion 212 and the portion of the protrusion 212 close to the end portion of the protrusion is irradiated with the laser beam and damaged, a thin portion on the end portion side breaks diagonally in a fiber direction as shown in Figure 11, and formation of a sharp shape can be avoided.

Also, the weaving direction of the plain weaving of the workpiece support member 21-2 is made diagonal in the 45°-45° direction to the long side-short side direction of the workpiece support member 21-2, so that fibers of the protrusion 212 can resist loads from an upward direction and a lateral direction, and strength of the workpiece support member 21-2 can be increased. At this time, the protrusion 212 of the workpiece support member 21-2 is formed in a trapezoidal shape with an angle of opposite ends of an upper base being close to 135° as shown in Figure 12, so that an oblique side of the protrusion 212 is parallel to the weaving direction of the plain weaving, to increase the strength of the workpiece support member 21-2.

### [Workpiece Support Member 21-3 with Third Shape]

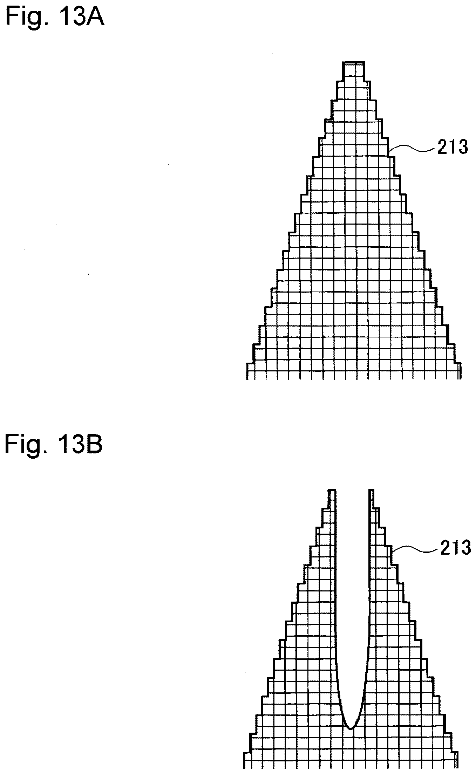

The workpiece support member 21-3 with the third shape has an upper end part continuously provided with triangular protrusions 213 in the same manner as in the workpiece support member 21-1 with the first shape. A long side-short side direction of the workpiece support member 21-3 is diagonal in a 0°-90° direction to a weaving direction, and as shown in Figure 13A, an oblique side of each triangular protrusion 213 is formed in a staircase shape.

In a case where the workpiece support member 21-3 is installed in the workpiece support table 20 and the protrusion 213 is irradiated with a laser beam and damaged, a probability that a tip end of the protrusion 213 is flat as shown in Figure 13B heightens, and a probability that a sharp shape is formed lowers. Similarly, the oblique side of the trapezoidal protrusion 212 provided in the workpiece support member 21-2 with the second shape may be formed in a staircase shape.

As for the workpiece support member 21-1 with the first shape to the workpiece support member 21-3 with the third shape described above, a plurality of members are arranged parallel to the X-direction in the workpiece support table 20.

### <Second Embodiment>

In a second embodiment, a plurality of workpiece support members are installed to cross each other in a workpiece support table 20.

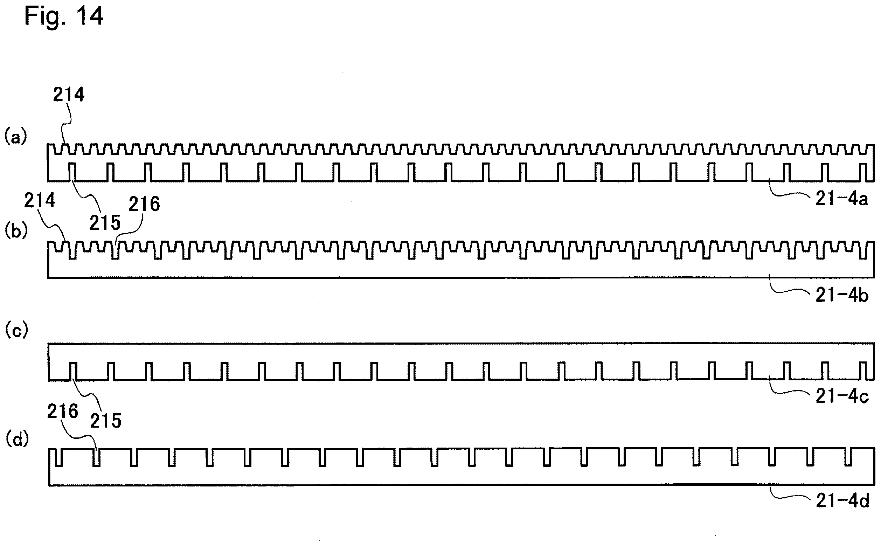

Each workpiece support member for use in the second embodiment will be described with reference to Figure 14. A workpiece support member 21-4a shown in Figure 14(a) has an upper end part continuously provided with trapezoidal protrusions 214 and has a lower end part provided with slits 215 at predetermined intervals, each slit corresponding to a thickness of the workpiece support member for sandwiching the workpiece support member that is another plate-shaped member. A workpiece support member 21-4b shown in Figure 14(b) has an upper end part continuously provided with trapezoidal protrusions 214 and provided with slits 216 at predetermined intervals. A workpiece support member 21-4c shown in Figure 14(c) has a flat upper end part and has a lower end part provided with slits 215 at predetermined intervals. A workpiece support member 21-4d shown in Figure 14(d) has an upper end part provided with slits 216 at predetermined intervals and has a flat lower end part.

A plurality of workpiece support members 21-4a to 21-4d configured in this way are used as appropriate, and each slit 216 of the workpiece support member 21-4b or the workpiece support member 21-4d is fitted into each slit 215 of the lower end part of the workpiece support member 21-4a or the workpiece support member 21-4c. Consequently, the plurality of workpiece support members 21-4a to 21-4d have plate surfaces crossing each other perpendicularly to a floor surface and are combined in a mesh shape.

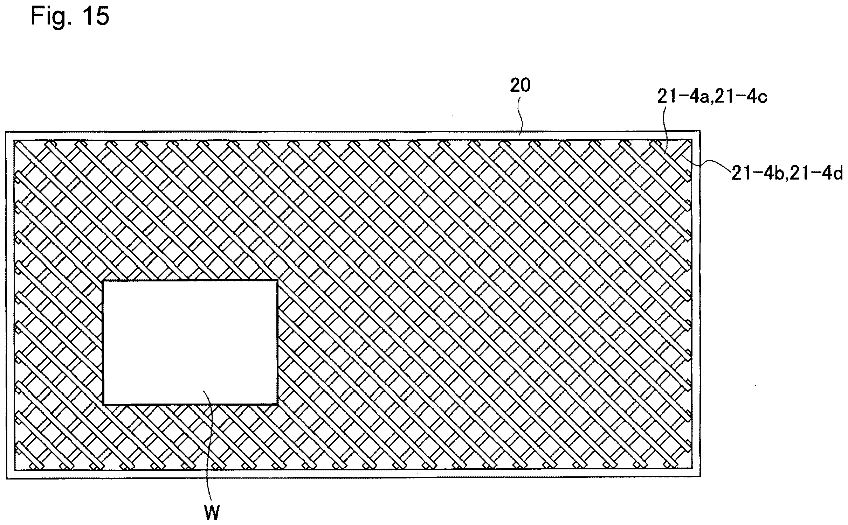

As shown in Figure 15, the workpiece support members 21-4a to 21-4d combined in the mesh shape are arranged in the workpiece support table 20. Thus, the workpiece support members 21-4a to 21-4d are arranged, so that a workpiece W can be further stably supported.

According to the first and second embodiments described above, the workpiece support members 21-1 to 21-3 and 21-4a to 21-4d are formed using carbon fibers and are therefore excellent in durability, and a frequency of replacement can be significantly reduced as compared with a case where a conventional workpiece support member made of a metal is used.

In the first and second embodiments, it has been described a case where the workpiece support member is formed of plainly woven carbon fibers in a plate shape, but weaving is not limited to the plain weaving, and any workpiece support member may be similarly used as long as the member is formed in a plate shape containing carbon fibers in a plurality of different directions (at least two directions). Also, in this case, when carbon fibers in the diagonal direction that does not match the 0°-90° direction to the long side-short side direction of the workpiece support member are contained, the formation of the sharp shape in the tip end of the protrusion can be avoided in a case where the laser beam hits the protrusion 211, 212 or 214 to damage the protrusion. Also, the strength of the workpiece support member heightens.

### <Third Embodiment>

In a third embodiment, in place of the workpiece support members 21, a plurality of workpiece support members 210 are arranged in an X-direction in a workpiece support table 20 shown in Figure 1. In the same manner as in Figure 2, the plurality of workpiece support members 210, in a state where each plate surface is perpendicular to a floor surface and each member is curved in an S-shape in a long side direction, may be installed in the workpiece support table 20.

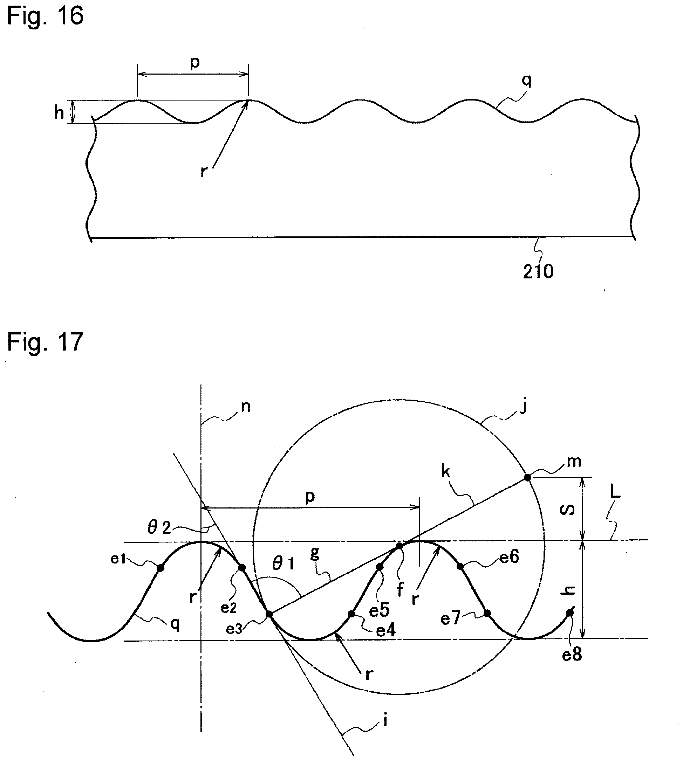

Figure 16 is a partial front view of one workpiece support member 210. The workpiece support member 210 is formed in a long shape cut out from a thin plate formed by plainly weaving carbon fibers (a C/C composite material) in the same manner as in the workpiece support member 21. Common parts between the workpiece support member 210 and the workpiece support member 21 are not described, and differences between the members are only described.

A shape of the workpiece support member 210 will be described with reference to Figure 16. The workpiece support member 210 is an oblong plate-shaped member and has an upper side formed in a continuous wave shape including a waveform q. In this way, the upper side of the workpiece support member 210 is formed in the wave shape, to form a gap between a workpiece W and the workpiece support member 210, so that a release space for assist gas generated during thermal processing can be secured.

Also, spatter scattered during the thermal processing is discharged through the gap, and bounce of spatter to the workpiece W can be reduced. Even in the workpiece support member 210 made of carbon fibers, when a contact area with the workpiece W is large, the release space for the assist gas cannot be secured, and hence the contact area with the workpiece W may be smaller. When a laser beam hits the triangular protrusion 211 in the first embodiment to damage the protrusion as described above, a sharp shape is formed, and hence a worker needs to pay attention during a replacement work of the workpiece support member 21. The workpiece support member 210 has the upper side formed in the wave shape, and hence the sharp shape is hard to be formed even when the member is damaged.

In Figure 16, the waveform q of the upper side of the workpiece support member 210 is formed with a gentle curve in which a wave height h has a value lower than a predetermined value, a tip end curvature radius r has a value larger than a predetermined value, and a space (pitch) p between vertices of the waveform q is large.

Description will be made in detail as to the waveform q with reference to Figure 17. Figure 17 is a partially enlarged view of the upper side of the workpiece support member 210 shown in Figure 16. The waveform q of the upper side of the workpiece support member 210 is formed as follows. A mountaintop curve e1-e2 and a valley bottom curve e3-e4 each having the tip end curvature radius r are connected by a straight inclined line e2-e3. The valley bottom curve e3-e4 and a mountaintop curve e5-e6 are connected by an inclined line e4-e5. Similarly, the mountaintop curve e5-e6 and a valley bottom curve e7-e8 are connected by an inclined line e6-e7. These mountaintop curve, inclined line and valley bottom curve are continuously connected, to form the waveform q having the pitch p and the wave height h.

At this time, a straight line, which linearly extends from a connection point e3 between the valley bottom curve e3-e4 and the inclined line e2-e3 connected to this curve and is tangent to a mountaintop curve adjacent to the valley bottom curve e3-e4, is made a tangent line g. Also, a line extended from the inclined line e2-e3 is an extension line i. Here, the wave height h of the waveform q and the tip end curvature radius r of each of the respective mountaintop curves and valley bottom curves are set so that an angle θ1 of the waveform q on a mountaintop side, formed by the tangent line g and the extension line i, is equal to or more than 90°.

By setting the wave height h and tip end curvature radius r of the waveform q in this way, the upper side of the workpiece support member 210 is formed in a gentle wave shape, and a wide gap is formed between the workpiece W and the workpiece support member 210. Consequently, it becomes easy to remove spatter deposited on the workpiece support member 210, and an upper part of the workpiece support member 210 can be prevented from being clogged with the spatter. Also, by increasing the tip end curvature radius r of the waveform q, a buckling strength of the upper part of the workpiece support member 210 can be increased.

Further, by increasing the tip end curvature radius r of the waveform q, the pitch p of the waveform q is widened. With the widened pitch p, in a case where a small object such as a fragment of the workpiece W falls into the upper part and a first end portion that is one end of the object is fitted in a valley part of the waveform q, and a second end portion that is the other end of the object rises above a mountaintop point of the waveform q, then a height from the mountaintop point to the second end portion (hereinafter referred to also as "a rising height") can be suppressed. This can prevent the fallen small object from interfering with the laser head 41.

Description will be made as to the rising height of the small object fallen in the workpiece support member 210. When the small object falls onto the workpiece support member 210 with the above-described shape, and if a dimension of the fallen small object is shorter than a predetermined range, the whole small object falls into a valley of the waveform q, and a rising part does not occur. Further, if the dimension of the fallen small object is longer than the predetermined range, the small object rotates about a contact point f shown as a fulcrum in Figure 17, the rising height becomes lower or parallel to the floor surface, and the small object does not rise above the workpiece support member 210.

On the other hand, if the dimension of the fallen small object is within the predetermined range, the first end portion of the small object fits in the valley part of the waveform q, a center portion comes in contact with a mountaintop curve adjacent to the valley part, and the second end portion rises above a pass line L connecting mountaintop points of waveforms q. Particularly, in a case where the small object falls to a position that overlaps with the tangent line g and the first end portion of the small object fits in the connection point e3 that is an upper end of the valley bottom curve e3-e4, the rising height of the second end portion is highest.

Here, a circle j is drawn with the tangent line g (from the contact point f to the connection point e3) as a radius about the contact point f as a center, and then a point at which an extension line k of the tangent line g intersects the circle j is an intersection point m. In a case where the small object with a predetermined length falls to a position that overlaps with the tangent line g and the extension line k, and has the first end portion fitted in the connection point e3 and an intermediate portion rest in contact with the contact point f, a maximum value of the dimension of the small object corresponds to a length from the connection point e3 to the intersection point m, which is a diameter of the circle j. Then, when the small object with this maximum dimension falls to the position that overlaps with the tangent line g and the extension line k, a rising height s of the second end portion of the small object corresponds to a maximum value of the rising height of the small object in the workpiece support member 210. When a shape of the second end portion of the small object is formed including portions with different heights, the rising height s of the small object is the highest point in the second end portion.

Consequently, the rising height s of the second end portion in the case where the small object falls onto the workpiece support member 210 can be adjusted in a desired range, by changing the wave height h and the tip end curvature radius r of each of the mountaintop curve and the valley bottom curve, while keeping the waveform q of the upper part of the workpiece support member 210 in a state where the angle θ1 is equal to or more than 90°. A range of the rising height s of the second end portion of the small object is set to, for example, a value smaller than the wave height h.

Also, when changing the tip end curvature radius r, a value of a cut tip end angle θ2 of the mountaintop curve e1-e2 may be adjusted as appropriate, the angle being formed by a straight line n and the extension line i, the straight line n being a straight line drawn perpendicular from a vertex of the mountaintop curve e1-e2 to the floor surface.

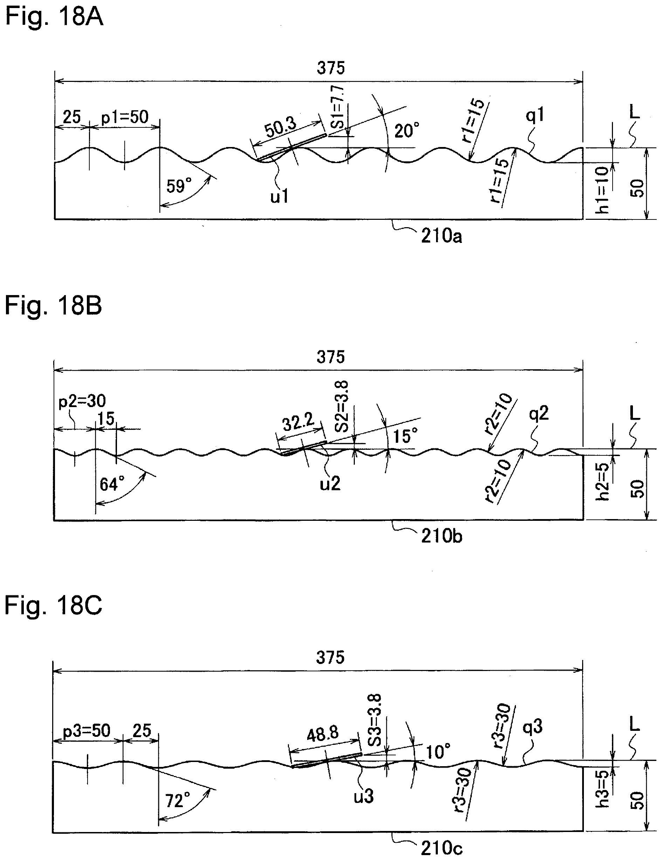

Description will be made as to workpiece support members 210a to 210e shown in Figure 18A to Figure 18E as specific examples of the workpiece support member 210 configured as described above.

The workpiece support member 210a shown in Figure 18A has an oblong shape with a horizontal size of 375 mm and a vertical size of 50 mm and has an upper side formed in a wave shape including a waveform q1. In the waveform q1, a pitch p1 is 50 mm, a wave height h1 is 10 mm, a tip end curvature radius r1 is 15 mm, and a mountaintop curve cut tip end angle is 59°. In the workpiece support member 210a, a maximum dimension of a small object u1, in which a rising part occurs, when falling is 50.3 mm. In a case where the small object u1 with this dimension falls and has one end fitted in a valley of the waveform q1, an angle formed by the small object u1 and a pass line L is 20°, and a rising height s1 of the small object u1 is 7.7 mm. That is, a maximum value of the rising height of the small object u1 in the workpiece support member 210a is 7.7 mm.

The workpiece support member 210b shown in Figure 18B has an oblong shape with a size similar to that of the workpiece support member 210a and has an upper side formed in a wave shape including a waveform q2. In the waveform q2, a pitch p2 is 30 mm, a wave height h2 is 5 mm, a tip end curvature radius r2 is 10 mm, and a mountaintop curve cut tip end angle is 64°. In the workpiece support member 210b, a maximum dimension of a small object u2, in which a rising part occurs, when falling is 32.2 mm. In a case where the small object u2 with this dimension falls and has one end fitted in a valley of the waveform q2, an angle formed by the small object u2 and a pass line L is 15°, and a rising height s2 of the small object u2 is 3.8 mm. That is, a maximum value of the rising height of the small object u2 in the workpiece support member 210b is 3.8 mm.

The workpiece support member 210c shown in Figure 18C has an oblong shape with a size similar to that of the workpiece support member 210a and has an upper side formed in a wave shape including a waveform q3. In the waveform q3, a pitch p3 is 50 mm, a wave height h3 is 5 mm, a tip end curvature radius r3 is 30 mm, and a mountaintop curve cut tip end angle is 72°. In the workpiece support member 210c, a maximum dimension of a small object u3, in which a rising part occurs, when falling is 48.8 mm. In a case where the small object u3 with this dimension falls and has one end fitted in a valley of the waveform q3, an angle formed by the small object u3 and a pass line L is 10°, and a rising height s3 of the small object u3 is 3.8 mm. That is, a maximum value of the rising height of the small object u3 in the workpiece support member 210c is 3.8 mm.

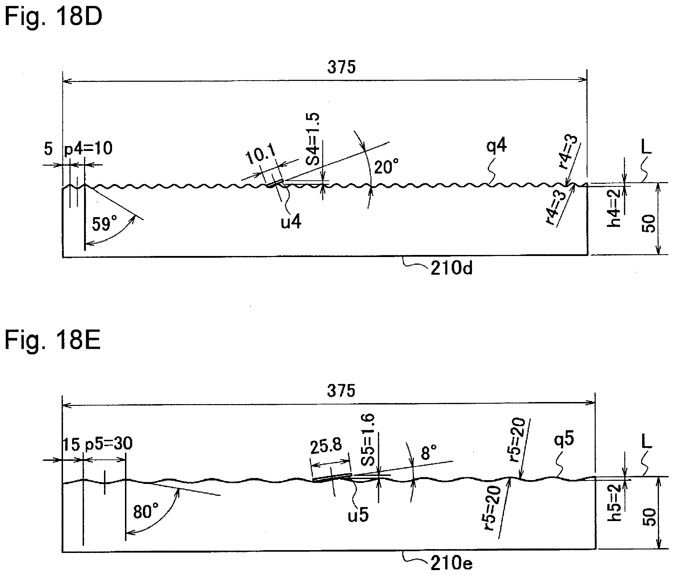

The workpiece support member 210d shown in Figure 18D has an oblong shape with a size similar to that of the workpiece support member 210a and has an upper side formed in a wave shape including a waveform q4. In the waveform q4, a pitch p4 is 10 mm, a wave height h4 is 2 mm, a tip end curvature radius r4 is 3 mm, and a mountaintop curve cut tip end angle is 59°. In the workpiece support member 210d, a maximum dimension of a small object u4, in which a rising part occurs, when falling is 10.1 mm. In a case where the small object u4 with this dimension falls and has one end fitted in a valley of the waveform q4, an angle formed by the small object u4 and a pass line L is 20°, and a rising height s4 of the small object u4 is 1.5 mm. That is, a maximum value of the rising height of the small object u4 in the workpiece support member 210d is 1.5 mm.

The workpiece support member 210e shown in Figure 18E has an oblong shape with a size similar to that of the workpiece support member 210a and has an upper side formed in a wave shape including a waveform q5. In the waveform q5, a pitch p5 is 30 mm, a wave height h5 is 2 mm, a tip end curvature radius r5 is 20 mm, and a mountaintop curve cut tip end angle is 80°. In the workpiece support member 210e, a maximum dimension of a small object u5, in which a rising part occurs, when falling is 25.8 mm. In a case where the small object u5 with this dimension falls and has one end fitted in a valley of the waveform q5, an angle formed by the small object u5 and a pass line L is 8°, and a rising height s5 of the small object u5 is 1.6 mm. That is, a maximum value of the rising height of the small object u5 in the workpiece support member 210e is 1.6 mm.

In this way, by changing the waveform of the wave shape of the upper side of the workpiece support member 210, the maximum value of the rising height when the small object falls onto the workpiece support member 210 can be adjusted as appropriate, depending on a distance from an upper end of the workpiece support member 210 to the laser head 41 or the like.

The workpiece support member 210 configured as described above has the upper part formed in the wave shape of the gentle waveform with the large tip end curvature radius, and is therefore excellent in durability, so that the release space for the assist gas generated during the thermal processing can be secured while preventing welding to the workpiece W to be processed.

The present invention is not limited to the first to third embodiments described above and can be variously changed without departing from the scope of the present invention as defined in the claims

Slits similar to those of the workpiece support member in the second embodiment may be formed in the workpiece support member 210 of the third embodiment, and a plurality of workpiece support members 210 may be combined in a mesh shape.

## Claims

1. A workpiece support member (21) for use with a workpiece support table (20), the workpiece support member (21) being formed of carbon and having a long plate shape with a long side direction and a short side direction,
**characterized in that**
the support member (21) is formed of carbon fibers in a direction diagonal to the long side direction and a direction diagonal to the short side direction.

2. The workpiece support member (21) for use with the workpiece support table (20) according to claim 1, wherein the workpiece support member (21) includes an upper end part continuously provided with triangular or trapezoidal protrusions (211, 212, 213, 214).

3. The workpiece support member (21) for use with the workpiece support table (20) according to claim 2, wherein an oblique side of each of the protrusions (213) is formed in a staircase shape.

4. The workpiece support member (21) for use with the workpiece support table (20) according to claim 1, wherein the workpiece support member (21) includes an upper side formed in a continuous wave shape including a curve.

5. The workpiece support member (21) for use with the workpiece support table (20) according to any one of the preceding claims, further comprising a slit (215, 216) provided to cross and fit another plate-shaped member.

6. The workpiece support member (21) for use with the workpiece support table (20) according to claim 4, wherein the wave shape is continuously formed by connecting a mountaintop curve (e5-e6) and a valley bottom curve (e3-34) by a straight inclined line (e4-e5), and
a wave height (h) and a tip end curvature radius (r) of the wave shape are set so that an angle formed by a tangent line (g) linearly extending from a connection point (e3) between a predetermined valley bottom curve (e3-34) and an inclined line (e2-e3) connected to the predetermined valley bottom curve (e3-34) and being tangent to a predetermined contact point (f) of a mountaintop curve (e5-e6) adjacent to the valley bottom curve (e3-34), and the inclined line (e2-e3) connected to the predetermined valley bottom curve (e3-34) is equal to or more than 90°.

7. The workpiece support member (21) for use with the workpiece support table (20) according to claim 4 or 6, wherein in the wave shape, in a case where a small object falls to an upper part of the workpiece support member (21) and a first end portion of the small object is fitted in a valley part of a waveform (q) and a second end portion of the small object rises above a mountaintop point of the waveform (q), a height from the mountaintop point to a highest point of the second end portion is set to be smaller than a wave height (h).

8. A thermal processing machine, wherein
the workpiece support member (21) according to any one of the preceding claims, is installed in a workpiece support table (20) to be perpendicular to a floor surface in a curved manner in a long side direction of the workpiece support member (21).

9. A thermal processing machine, wherein
a plurality of workpiece support members (21-4a, 21-4b, 21-4c, 21-4d) according to claim 5 are combined in a mesh shape and installed in a workpiece support table (20).

## Patentansprüche

1. Werkstück-Halteglied (21) für die Verwendung mit einem Werkstück-Haltetisch (20), wobei das Werkstück-Halteglied (21) aus Kohlenstoff ausgebildet ist und eine lange Plattenform mit einer Lange-Seite-Richtung und einer Kurze-Seite-Richtung aufweist,
**dadurch gekennzeichnet, dass**
das Halteglied (21) aus Kohlefasern in einer Richtung orthogonal zu der Lange-Seite-Richtung und in einer Richtung diagonal zu der Kurze-Seite-Richtung ausgebildet ist.

2. Werkstück-Halteglied (21) für die Verwendung mit dem Werkstück-Haltetisch (20) nach Anspruch 1, wobei das Werkstück-Halteglied (21) einen oberen Endteil, der kontinuierlich mit dreieckigen oder trapezförmigen Vorsprüngen (211, 212, 213, 214) versehen ist, umfasst.

3. Werkstück-Halteglied (21) für die Verwendung mit dem Werkstück-Haltetisch (20) nach Anspruch 2, wobei eine schräge Seite jedes der Vorsprünge (213) mit einer Treppenform ausgebildet ist.

4. Werkstück-Halteglied (21) für die Verwendung mit dem Werkstück-Haltetisch (20) nach Anspruch 1, wobei das Werkstück-Halteglied (21) eine obere Seite, die mit einer kontinuierlichen Wellenform einschließlich einer Krümmung ausgebildet ist, umfasst.

5. Werkstück-Halteglied (21) für die Verwendung mit dem Werkstück-Haltetisch (20) nach einem der vorstehenden Ansprüche, der weiterhin einen Schlitz (215, 216) umfasst, der vorgesehen ist, um ein anderes plattenförmiges Glied zu kreuzen und zu passen.

6. Werkstück-Halteglied (21) für die Verwendung mit dem Werkstück-Haltetisch (20) nach Anspruch 4, wobei die Wellenform kontinuierlich ausgebildet ist, indem sie eine Gipfelkrümmung (e5-e6) und eine Talkrümmung (e3-e4) durch eine gerade, geneigte Linie (e4-e5) verbindet, und
die Wellenhöhe (h) und der Endkrümmungsradius (r) der Wellenform derart gesetzt sind, dass ein Winkel, der durch eine Berührungslinie (g), die sich linear von einem Verbindungspunkt (e3) zwischen einer vorbestimmten Talkrümmung (e3-e4) und einer geneigten Linie (e2-e3), die mit der vorbestimmten Talkrümmung (e3-e4) verbunden ist und einen vorbestimmten Kontaktpunkt (f) einer Gipfelkrümmung (e5-e6) in Nachbarschaft zu der Talkrümmung (e3-e4) berührt, erstreckt, und durch die geneigte Linie (e2-e3), die mit der vorbestimmten Talkrümmung (e3-e4) verbunden ist, gebildet wird, gleich oder größer als 90° ist.

7. Werkstück-Halteglied (21) für die Verwendung mit dem Werkstück-Haltetisch (20) nach Anspruch 4 oder 6, wobei in der Wellenform in einem Fall, in dem ein kleines Objekt zu einem oberen Teil des Werkstück-Halteglieds (21) fällt und ein erster Endteil des kleinen Objekts in einen Talteil der Wellenform (q) gepasst wird und ein zweiter Endteil des kleinen Objekts über einen Gipfelpunkt der Wellenform (q) steigt, die Höhe von dem Gipfelpunkt zu dem höchsten Punkt des zweiten Endteils kleiner gesetzt ist als eine Wellenhöhe (h).

8. Thermische Verarbeitungsmaschine, wobei:
das Werkstück-Halteglied (21) gemäß einem der vorstehenden Ansprüche in einem Werkstück-Haltetisch (20) derart installiert ist, dass es senkrecht zu einer Bodenfläche in einer gekrümmten Weise in einer Lange-Seite-Richtung des Werkstück-Halteglieds (21) ist.

9. Thermische Verarbeitungsmaschine, wobei:
eine Vielzahl von Werkstück-Haltegliedern (21-4a, 21-4b, 21-4c, 21-4d) gemäß Anspruch 5 gitterförmig kombiniert und in einem Werkstück-Haltetisch (20) installiert sind.

## Revendications

1. Elément de support de pièce d'usinage (21) à utiliser avec une table de support de pièce d'usinage (20), l'élément de support de pièce d'usinage (21) étant formé de carbone et ayant une forme de plaque longue avec une direction de côté long et une direction de côté court,
**caractérisé par le fait que** l'élément de support (21) est formé de fibres de carbone dans une direction diagonale par rapport à la direction du côté long et une direction diagonale par rapport à la direction du côté court.

2. Elément de support de pièce d'usinage (21) à utiliser avec la table de support de pièce d'usinage (20) selon la revendication 1, dans lequel l'élément de support de pièce d'usinage (21) comprend une partie d'extrémité supérieure pourvue en continu de protubérances triangulaires ou trapézoïdales (211, 212, 213, 214).

3. Elément de support de pièce d'usinage (21) à utiliser avec la table de support de pièce d'usinage (20) selon la revendication 2, dans lequel un côté oblique de chacune des protubérances (213) est en forme d'escalier.

4. Elément de support de pièce d'usinage (21) à utiliser avec la table de support de pièce d'usinage (20) selon la revendication 1, dans lequel l'élément de support de pièce d'usinage (21) comprend un côté supérieur formé dans une forme d'onde continue comprenant une courbe.

5. Elément de support de pièce d'usinage (21) à utiliser avec la table de support de pièce d'usinage (20) selon l'une quelconque des revendications précédentes, comprenant en outre une fente (215, 216) prévue pour traverser et s'adapter à un autre élément en forme de plaque.

6. Elément de support de pièce d'usinage (21) à utiliser avec la table de support de pièce d'usinage (20) selon la revendication 4, dans lequel la forme de vague est formée en continu en reliant une courbe de sommet de montagne (e5-e6) et une courbe de fond de vallée (e3-34) par une ligne droite inclinée (e4-e5), et
une hauteur de vague (h) et un rayon de courbure d'extrémité (r) de la forme de vague sont réglés de telle sorte qu'un angle formé par une ligne tangente (g) s'étendant linéairement à partir d'un point de connexion (e3) entre une courbe de fond de vallée prédéterminée (e3-34) et une ligne inclinée (e2-e3) reliée à la courbe de fond de vallée prédéterminée (e3-34) et étant tangente à un point de contact prédéterminé (f) d'une courbe de sommet de montagne (e5-e6) adjacente à la courbe de fond de vallée (e3-34), et la ligne inclinée (e2-e3) reliée à la courbe de fond de vallée prédéterminée (e3-34) et la ligne inclinée (e4-e5), et la ligne inclinée (e2-e3) reliée à la courbe prédéterminée du fond de la vallée (e3-34) est égale ou supérieure à 90°.

7. Elément de support de pièce d'usinage (21) à utiliser avec la table de support de pièce d'usinage (20) selon les revendications 4 ou 6, dans lequel dans la forme de vague, au cas où un petit objet tombe dans une partie supérieure de l'élément de support de pièce d'usinage (21) et une première partie d'extrémité du petit objet est ajustée dans une partie de vallée d'une forme de vague (q) et une seconde partie d'extrémité du petit objet s'élève au-dessus d'un point de sommet de la forme de vague (q), une hauteur du point de sommet de la montagne à un point le plus élevé de la seconde partie d'extrémité est réglée pour être plus petite qu'une hauteur de vague (h).

8. Machine de traitement thermique, dans laquelle
l'élément de support de pièce d'usinage (21) selon l'une des revendications précédentes est installé dans une table de support de pièce d'usinage (20) pour être perpendiculaire à une surface de plancher de manière incurvée dans la direction du côté long de l'élément de support de pièce d'usinage (21).

9. Machine de traitement thermique, dans laquelle
plusieurs éléments de support de pièce d'usinage (21-4a, 21-4b, 21-4c, 21-4d) selon la revendication 5 sont combinés en forme de maille et installés dans une table de support de pièce d'usinage (20).
